# EUROPEAN PATENT APPLICATION

(11) **EP 1 647 720 A1**
(43) Date of publication of application: **19.04.2006**
(21) Application number: 05394029.2
(22) Date of filing: 11.10.2005
(51) Int. Cl.: F15B 13/06, F15B 13/04

(54) **Spool valve**

(30) Priority: 12.10.2004 IE 20040688
(71) Applicant: McInerney, James J., Newmarket-on-Fergus, County Clare (IE); McInerney, James P., Newmarket-on-Fergus, County Clare (IE)
(72) Inventor: McInerney, James J., Newmarket-on-Fergus, County Clare (IE); McInerney, James P., Newmarket-on-Fergus, County Clare (IE)
(74) Representative: McCarthy, Denis Alexis

(57) **Abstract**

The invention provides a fluid control valve (1) for controlling the flow of hydraulic fluid from a hydraulic pump (5) to and from a plurality of hydraulic motors (7). The valve conveniently includes selector valve (3) for selectively energizing a flow divider/combiner spool (2) that controls the flow of hydraulic fluid to and from the motors (7). The flow divider/combiner spool (2) has on its periphery lubrication grooves (15) which also act as metering grooves. An advantage of the fluid control valve of the invention is that it regulates and equalises the flow and pressure of the hydraulic fluid delivered between a hydraulic pump (5) and a plurality of hydraulic motors (7), thereby enabling each hydraulic motor to rotate in a synchronized fashion when traction control is required and without the operator having to deactivate the valve, the valve will disengage once traction to all wheels has been regained.

## Description

The present invention relates to a fluid control valve for controlling the flow of hydraulic fluid between a hydraulic pump and a plurality of hydraulic motors. More particularly, the invention relates to a hydraulic fluid control valve for dividing, regulating and equalizing the flow and pressure of the hydraulic fluid delivered between a hydraulic pump and two or more hydraulic motors when configured as a parallel drive circuit.

Fluid control valves are well known in the art and have found application in both fuel control systems and compression release engine brakes of vehicles. In particular, such valves are commonly used to control the flow of hydraulic fluid in the hydraulic drive systems of vehicles. Taking as an example, a hydraulic parallel drive system for a vehicle such as a three-wheel drive forklift truck, an inherent feature of this type of drive system is an open differential whereby an unregulated but balanced amount of hydraulic fluid is delivered to each wheel of the vehicle. This arises because hydraulic fluid such as oil will always flow through the path of least resistance. Having an open differential is an advantage when a vehicle is travelling on even ground such as a paved surface. In such conditions, the open differential allows driving around bends and turning when the tyres are in contact with the even driving surface.

However, having an open differential is no longer an advantage when the vehicle encounters terrain where traction is compromised. With an open differential, if a wheel loses traction as can happen on uneven ground, all drive power is delivered to that wheel resulting in the wheel spinning without gripping the surface to enable it to move the vehicle in the direction of travel. In such conditions, full flow of hydraulic fluid is supplied to the wheel that is spinning. With no remaining flow available for the other drive wheels that do have traction, the vehicle cannot continue its motion in a forward or reverse direction. In order to regain vehicle motion, power must be taken from the wheel that is spinning out and redistributed to the wheels that are not. In hydraulic parallel drive systems, this is achieved by regulating or metering the fluid flow to the wheel that is spinning out while also maintaining sufficient system flow and pressure to drive the remaining wheels that do have traction.

United States Patent Specification No. US 5,647,211 discloses a valve for controlling the flow of hydraulic fluid between a hydraulic pump and a pair of hydraulic motors. The valve disclosed in US 5,647,211 is a complex flow divider which comprises two flow dividers, namely one flow divider for each wheel motor. Also several spools and a plurality of pressure selector valves/ solenoid control valves are used. The valve as disclosed in US 5,647,211 also does not readily or easily lend itself to driving a three wheeled vehicle having three wheel motors.

A further disadvantage of current fluid control valves known in the art is that they require the operator to disengage the valve once traction has been regained. If this operator dependent step is not performed in a timely fashion, damage to the hydraulic transmission can occur due to excessive heat generation resulting from the valve having been engaged for longer than necessary.

It is therefore an object of the present invention to provide an improved fluid control valve for use in hydraulic parallel drive systems to divide, regulate and equalize the flow and pressure of the hydraulic fluid delivered between a hydraulic pump and a plurality of hydraulic motors.

Thus, the present invention seeks to alleviate the disadvantages of known fluid control valves by providing an improved control valve, with a simple and robust design, and having less components than existing valves known in the art.

Accordingly, the present invention provides a fluid control valve for use in controlling the flow of hydraulic fluid between a hydraulic transmission pump and a plurality of hydraulic motors, the valve comprising a plurality of fluid lines for providing fluid to the respective hydraulic motors, a spool chamber and a flow divider/combiner spool which is longitudinally slideably moveable within the spool chamber between a first position and a second position; wherein in the first position, the flow divider/combiner spool provides unrestricted flow between the transmission pump and the plurality of motors, and in the second position, the flow divider/combiner spool provides controlled flow between the transmission pump and the plurality of motors.

An advantage of the fluid control valve of the present invention is that it regulates and equalises the flow and pressure of the hydraulic fluid delivered between a hydraulic pump and a plurality of hydraulic motors, thereby enabling each hydraulic motor to rotate in a synchronized fashion when traction control is required. The valve of the present invention also has the advantage that, without the operator having to deactivate the valve, the valve will disengage once traction to all wheels has been regained.

Conveniently, the fluid control valve includes a single spool chamber and a single flow divider/combiner spool.

Thus, the fluid control valve of the invention has the significant advantage that it allows for a single flow divider/combiner spool which is capable of controlling the flow of hydraulic fluid between the hydraulic pump and a plurality of hydraulic wheel motors. This represents a significant advance over the prior art.

Conveniently, the flow divider/combiner spool is held in the first position (unrestricted flow) by a biasing means which is preferably a compression spring.

The fluid control valve also includes operator-controllable selector means for controlling the position of the flow divider/combiner spool in the spool chamber. Ideally, when the selector valve is not activated, the flow divider/combiner spool is in the first position. When the selector valve is activated (energized), the flow divider/combiner spool is caused to move within the spool chamber, by an auxiliary fluid supply under pressure from an external source, such as a charge pump, against the action of the biasing means to the second position (controlled flow).

Conveniently, the operator-controllable selector means comprises a solenoid operated, 3-way selector valve.

Alternatively, the operator-controllable selector means may be a switch operable by pneumatic, mechanical, electrical or manual means.

Ideally, controlled flow is provided by means of a plurality of fluid flow control members located in a non-continuous manner along the length of the flow divider/combiner spool.

Ideally, the plurality of fluid flow control members comprise a plurality of a series of grooves formed on the outer surface of the flow divider/combiner spool.

Preferably, when the flow divider/combiner spool is in the second position, the fluid flow control members are in fluid communication with the fluid lines connecting the transmission pump and the plurality of motors, thereby allowing controlled flow between the transmission pump and the plurality of motors through the grooves formed on the outer surface of the flow divider/combiner spool.

Advantageously, the grooves on the outer surface of the flow divider/combiner spool also function as lubrication grooves to aid movement of the spool between the first and the second position within the spool chamber.

Preferably, the flow divider/combiner spool also includes a plurality of full-flow members provided along the length of the spool. The full-flow members are ideally provided in an arrangement with a full-flow member located adjacent to a fluid flow control member (series of controlled flow grooves). Thus, full-flow members and controlled flow grooves are provided in an alternate arrangement along the length of the spool.

Conveniently, when the spool is in the first position thereby providing unrestricted flow, the full-flow members are in fluid communication with the fluid lines connecting the transmission pump and the plurality of motors, thereby allowing full flow between the transmission pump and the plurality of motors.

Advantageously, the selector means need only be activated by the operator to overcome the force of the biasing means (compression spring) so as to move the spool from the first position to the second position (controlled flow). Once the spool is in the controlled flow position, the action of the high transmission pump fluid flow passing along the fluid control members causes the spool to remain in position. When traction is regained and the transmission pump fluid flow is reduced (caused by a reflex response by the operator to reduce engine throttle when traction is regained), the spool will be moved from the second position back to the first position under the action of the biasing means.

Various embodiments of the present invention together with other arrangements given for illustrative purposes only, will now be described, by way of example only, with reference to the accompanying drawings in which:
Figure 1 is a schematic diagram of a parallel circuit hydraulic drive system for a three-wheel drive vehicle which includes the fluid control valve of the present invention;
Figure 2 is a front sectioned view of the fluid control valve when the selector valve is not activated (de-energized), showing the flow divider/combiner spool in a first position permitting full, unrestricted flow between a plurality of motors and a transmission pump;
Figure 3 is a front sectioned view of the fluid control valve after the selector valve has been activated (energized), showing the flow divider/combiner spool in a second position, in which controlled flow between a plurality of motors and a transmission pump is achieved;
Figure 4 is an exploded view showing the components of the fluid control valve of the present invention including a detailed side view of one of the fluid flow control members showing grooved segments provided on the periphery of the flow divider/combiner spool;
Figure 5 is a top section view of the manifold block of the fluid control valve along the lines A-A of Figure 2;
Figure 6 is a side section view of the manifold block of the fluid control valve along the lines B-B of Figure 2;
Figure 7 is a top section view of the manifold block of the fluid control valve along the lines C-C of Figure 3; and
Figure 8 is a side section view of the manifold block of the fluid control valve along the lines D-D of Figure 3.

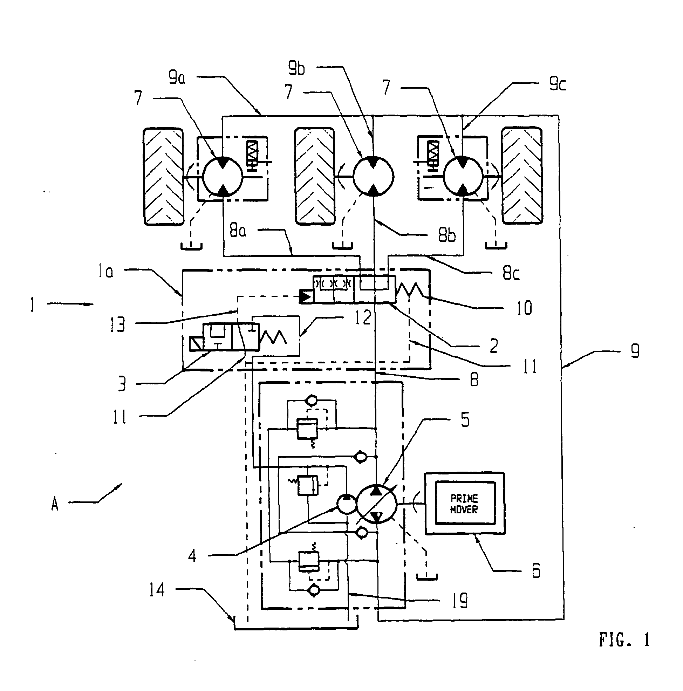

Referring to the drawings and initially to Figure 1, there is shown and indicated generally by reference letter A, a parallel circuit hydraulic drive system for a vehicle such as a three wheel drive forklift truck which hydraulic drive system incorporates the fluid control valve of the present invention indicated generally by reference numeral 1.

The hydraulic drive system A includes a prime mover 6, and a high-pressure transmission pump 5 coupled to the prime mover 6 to provide the hydraulic drive for the hydraulic drive system A. Also included in the hydraulic drive system A is the fluid control valve 1 of the present invention as well as a charge pump 4, fluid supply and return lines 8 and 9, motors 7, auxiliary fluid lines 11, 12, 13, a source of fluid 19 and a reservoir (or sump) 14. Construction hole plugs 18 provided on the periphery of the manifold block 1 a block access to fluid lines 11, 12 and 13. It is to be understood that fluid lines 8 and 9, and auxiliary fluid lines 11, 12, 13 are not connected and as such are separate fluid lines.

The high-pressure transmission pump 5 is operable in forward or reverse bias thereby providing high-pressure fluid supply to either line 8 or line 9 while the other line 9 or 8 acts as a low pressure fluid return line. It is to be understood that high-pressure includes any pressure up to but not limited to 450 Bar.

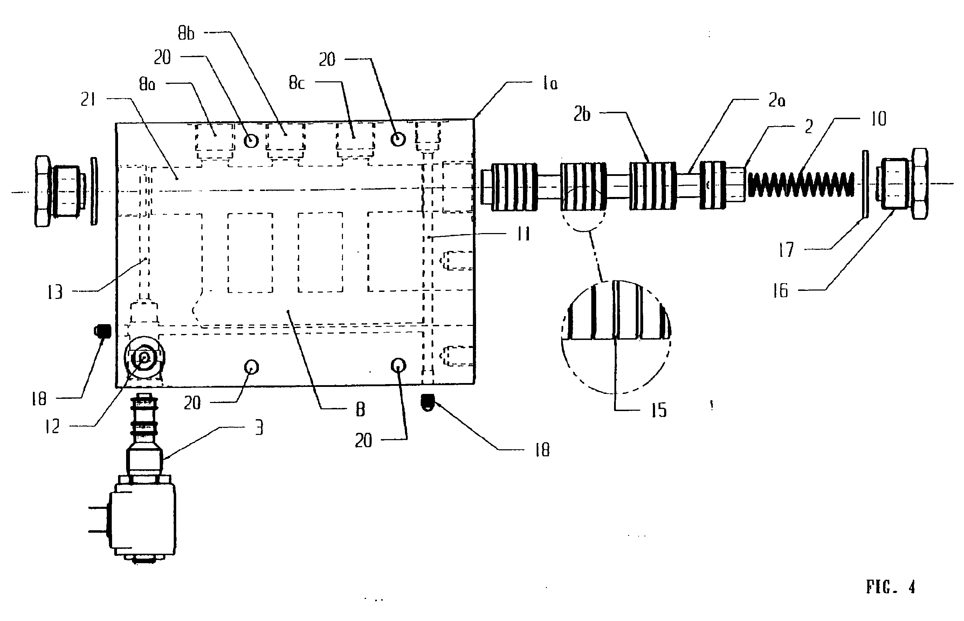

The fluid control valve 1 comprises a manifold block 1a having fluid lines 8, 8a, 8b, 8c, auxiliary fluid lines 11, 12, 13, a flow divider/combiner spool 2 received within a spool chamber (not shown) and a control compression spring 10. Additionally and conveniently, the fluid control valve 1 comprises a solenoid operated, 3-way, selector valve 3, as shown in Figure 4. Auxiliary fluid line 11 connects the flow divider/combiner spool 2 to the reservoir 14, as well as linking the selector valve 3 to the reservoir 14. Auxiliary fluid line 12 provides a pressure connection between the selector valve 3 and the charge pump 4 whereas auxiliary fluid line 13 connects the flow divider/combiner spool 2 to the selector valve 3. The fluid passing through auxiliary fluid lines 11, 12 and 13 is at a lower pressure than the fluid in supply line 8.

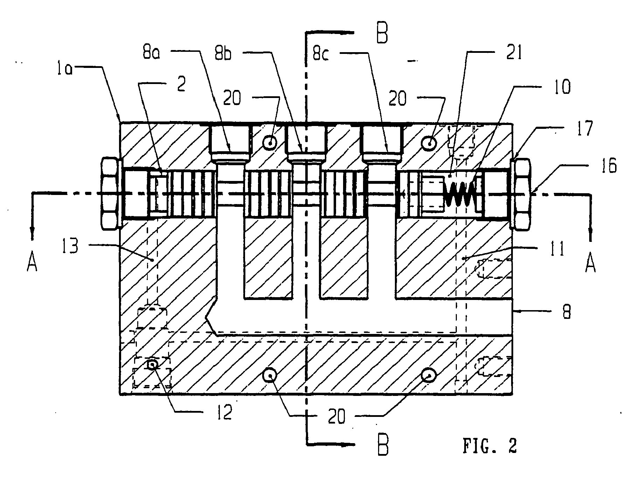

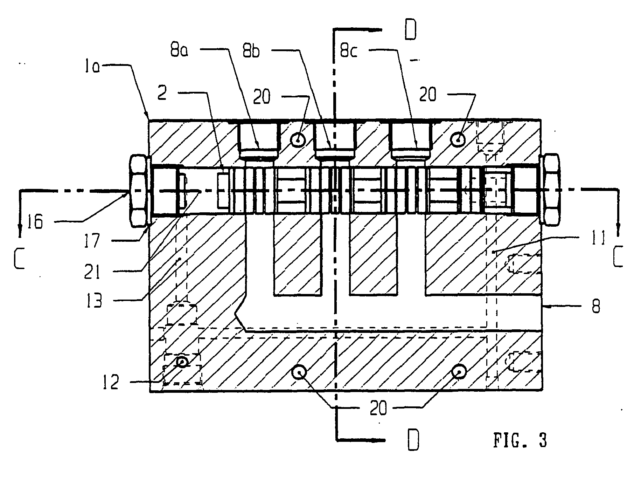

Referring now to Figures 1 to 4. The flow divider/ combiner spool 2 comprises a high pressure shuttle type spool. The position of the spool 2 in the spool chamber 21 is selectable by an operator. When the flow divider/combiner spool 2 is in the first position, as shown in Figure 2, unrestricted flow is allowed between the transmission pump 5 and the motors 7. The flow divider/combiner spool 2 is biased in the first position by the force of the compression spring 10. Auxiliary fluid lines 11 and 13 are connected while blocking any connection between auxiliary fluid lines 12 and 13. This enables the compression spring 10 to control the position of the flow divider/combiner spool 2 since auxiliary fluid line 13 has a direct connection to the reservoir 14. In this mode, full unrestricted flow between the pump 5 and the motors 7 is permitted. If an operator finds that a wheel is spinning out and wishes to regain control over the vehicle, he activates the selector valve 3. When the selector valve 3 is activated, a connection between auxiliary fluid line 12 and auxiliary fluid line 13 is made while blocking the connection to auxiliary fluid line 11. As a result, a charge pressure from the charge pump 4 overcomes the biasing force of the compression spring 10 by delivering fluid under pressure from a source 19 through auxiliary fluid line 13 to the spool chamber 21. This acts to move the flow divider/combiner spool 2 in the spool chamber 21 to a second position (as shown in Figure 3), in which the spring 10 is compressed. In this mode, controlled flow between the motors 7 and the pump 5 is permitted.

The manifold block 1a of the fluid control valve is mounted on a vehicle chassis or axle through mounting holes 20. The flow divider/combiner spool 2 extends along the length of the manifold block 1a and is capped at either end with a sealing member 17 and access plug 16.

The fluid line 8 is divided into fluid lines 8a, 8b and 8c which intersect the flow divider/combiner spool 2. The fluid control valve 1 provides divided flow from transmission pump 5 to motors 7 via fluid lines 8a, 8b and 8c or combined flow from motors 7 to transmission pump 5 via fluid lines 8a, 8b or 8c.

Divided flow to the motors 7 is provided when the transmission pump 5 is operating in forward bias and fluid line 8 is a high-pressure fluid supply line, with fluid line 9 acting as a low-pressure fluid return line. Alternatively, combined flow from the motors 7 is provided when the transmission pump 5 is operating in reverse bias and fluid line 8 is a low-pressure fluid return line, with fluid line 9 acting as a high-pressure fluid supply line. The fluid line 9 is divided into fluid lines 9a, 9b and 9c which supply fluid to the motors 7. Fluid flow through the flow divider/combiner spool 2 to or from the motors can either be unrestricted or controlled (metered) depending on whether or not the selector valve 3 is activated.

Referring now to Figure 4, the high pressure flow divider/combiner spool 2 is shown in more detail. The spool 2 includes a plurality of full flow sections 2a and a plurality of discrete (non-continuous) controlled flow members (grooves) 2b. The full flow sections 2a are aligned with the fluid lines 8a, 8b and 8c when the selector valve 3 is not activated, whereas the controlled flow members 2b are aligned with the fluid lines 8a, 8b and 8c when the selector valve 3 is activated. The flow divider/combiner spool 2 has cylindrical metering and lubrication grooves 15 on the outer surface of flow members 2b which provide a restricted flow path between the pump and the motors when the selector valve 3 is activated.

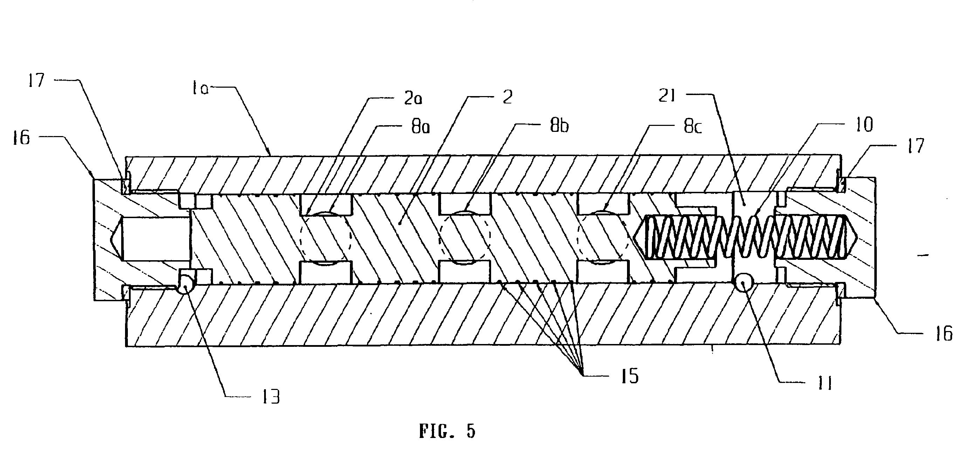

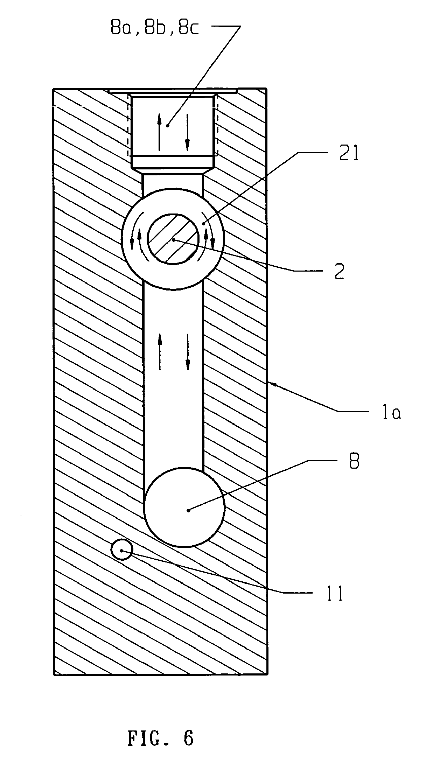

The operation of the flow divider/combiner spool 2 will now be described in more detail. Referring to Figures 5 and 6, when the selector valve is not activated (i.e. de-energized), the biasing force of the fully extended compression spring 10 holds the spool 2 in a first position with full flow sections 2a of the spool 2 aligned with fluid lines 8a, 8b and 8c, thereby permitting full unrestricted flow to or from the motors 7. In particular, Figure 6 shows an unrestricted flow path from fluid line 8a, 8b or 8c around the shuttle spool 2 to a motor 7 and vice versa. The flow path is illustrated by arrows in Figure 6.

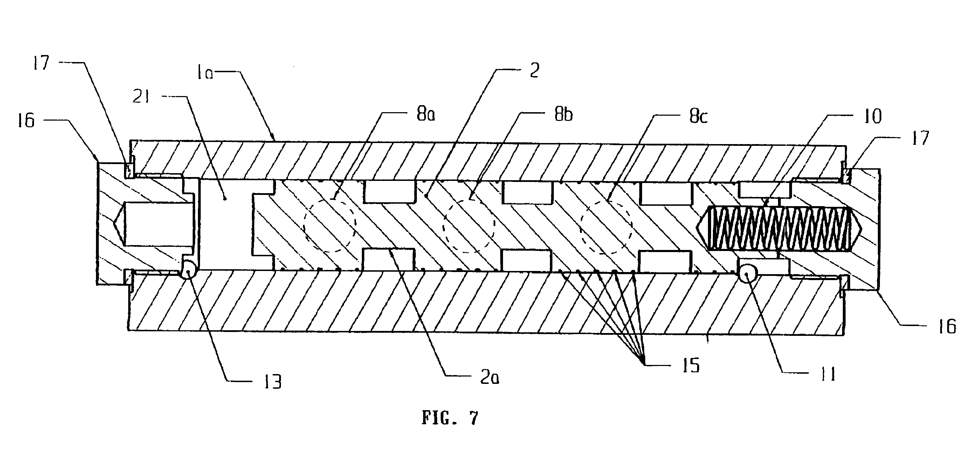

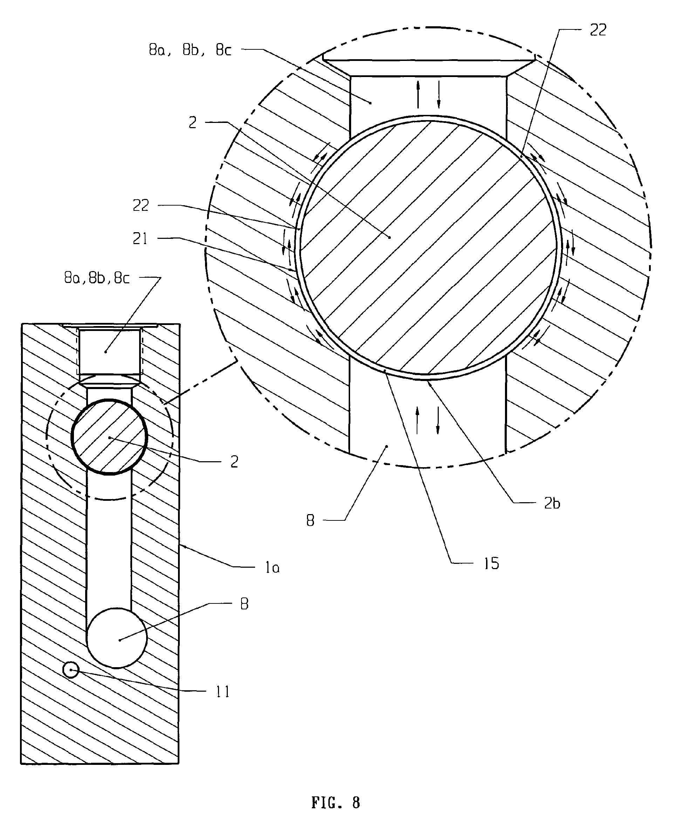

Referring now to Figures 7 and 8, when the selector valve is activated (energized), a charge pressure from charge pump 4 overcomes the force of the compression spring 10 and results in shifting of the flow divider/combiner spool 2 within the spool chamber 21, such that the flow divider combiner spool 2 assumes a second position in which controlled flow members 2b are aligned with fluid lines 8a, 8b, and 8c. The cylindrical metering and lubrication grooves 15 on the outer surface of controlled flow members 2b are aligned with fluid lines 8a, 8b and 8c permitting controlled flow to or from the motors.

In particular, Figure 8 shows the controlled flow path from fluid line 8a, 8b or 8c through the spool chamber 21 to a motor 7 through the metering and lubrication grooves 15 on the outer surface of controlled flow members 2b. A controlled flow path 22, formed by and between the grooves 15 and the walls of the spool chamber 21 provide a controlled flow path from fluid line 8a, 8b or 8c to a motor 7 and vice versa. The direction of fluid flow along flow path 22 is illustrated by arrows in Figure 8.

The fluid control valve 1 will now be described in use. In normal driving mode, that is, on a good traction surface such as a paved surface, the compression spring 10 forces the high pressure flow divider/combiner spool 2 to remain biased in the first position, thereby enabling full free flow of hydraulic fluid between the transmission pump 5 and the wheel motors 7.

When driving on uneven ground, in conditions where wheel slip is likely, the selector valve 3 is activated by the driver causing a charge pressure from the charge pump 4 to overcome the compression spring force and move the divider/combiner spool 2 in the opposite direction. This results in controlled flow to or from the wheel motors 7. Controlled flow is only provided after the selector valve 3 is activated. By restricting the flow of fluid between the pump and the wheel motors 7, equal fluid pressure and flow is delivered to each wheel, causing them to rotate in a synchronized fashion when traction control is required thereby allowing vehicle motion to be resumed. The selector valve 3 is only required to initiate movement of the spool 2 to the second position (controlled flow). Once the spool 2 is in the controlled flow position, the action of the high transmission pump fluid flow passing along the fluid control members 15 causes the spool 2 to remain in position. When traction is regained and the transmission pump fluid flow is reduced (caused by a reflex response by the driver to reduce engine throttle when traction is regained), the spool 2 will be moved from the second position to the first position under action of the biasing means (compression spring).

It should be noted that reference in the specification to flow between a pump and a motor or motors is to be understood as meaning that fluid can flow both to and from the wheel motors using the valve of the present invention.

Although the present invention has been described with reference to the preferred embodiment, it will be understood by those skilled in the art that various changes in form and detail may be made without departing from the scope of the invention as set forth in the accompanying claims.

## Claims

1. A fluid control valve (1) for use in controlling flow of hydraulic fluid between a hydraulic transmission pump (5) and a plurality of hydraulic motors (7), the valve comprising a plurality of fluid lines (8a, 8b, 8c) for providing fluid to the respective hydraulic motors, a spool chamber (21) and a flow divider/combiner spool (2) which is longitudinally slideably moveable within the spool chamber between a first position and a second position; wherein in the first position, the flow divider/combiner spool (2) provides unrestricted flow between the transmission pump (5) and the plurality of motors (7), and in the second position, the flow divider/combiner spool (2) provides controlled flow between the transmission pump (5) and the plurality of motors (7).

2. A fluid control valve (1) as claimed in Claim 1, wherein the fluid control valve includes a single spool chamber (21) and a single flow divider/combiner spool (2); and optionally wherein the flow divider/combiner spool (2) is held in the first position by a compression spring (10).

3. A fluid control valve (1) as claimed in any preceding claim, including operator-controllable selector means for initiating the controlling position of the flow divider/combiner spool (2) in the spool chamber (21), optionally wherein the operator-controllable selector means comprises a solenoid operated, 3-way selector valve (3).

4. A fluid control valve (1) as claimed in any preceding claim, wherein a plurality of fluid flow control members (2b) located in a non-continuous manner along the length of the flow divider/combiner spool (2) provides controlled flow; and the fluid flow control members (2b) optionally comprise a series of grooves (15) formed on the outer surface of the flow divider/combiner spool (2).

5. A fluid control valve (1) as claimed in Claim 4, wherein with the flow divider/combiner spool (2) in the second position the fluid flow control members (2b) are in fluid communication with the fluid lines (8a, 8b, 8c) connecting the transmission pump (5) and the plurality of motors (7), thereby allowing controlled flow from the transmission pump to and from the plurality of motors.

6. A fluid control valve (1) as claimed in Claim 4, wherein the grooves (15) on the outer surface of the flow divider/combiner spool (2) act as lubrication grooves to aid movement of the spool between the first position and the second position within the spool chamber and also act as a metering flow path when the spool is in the second position.

7. A fluid control valve (1) as claimed in any preceding claim, wherein the flow divider/combiner spool (2) includes a plurality of full-flow means (2a) provided along the length of the flow divider/combiner spool, optionally wherein the full-flow means (2a) comprise sections provided in an arrangement with a full-flow section adjacent the flow control members (2b).

8. A fluid control valve as claimed in Claim 7, wherein the full-flow sections (2a) and metering grooves (15) are provided in an alternate arrangement along the length of the flow divider/combiner spool (2).

9. A fluid control valve (1) as claimed in any preceding claim, wherein with the flow divider/combiner spool (2) in the first position, the full-flow sections (2a) are in fluid communication with the fluid lines (8a, 8b, 8c) connecting the transmission pump (5) and the plurality of motors (7), thereby allowing full flow between the transmission pump and the plurality of motors.

10. A fluid control valve (1) as claimed in Claim 3, wherein the selector means (3) need only be activated by the operator to overcome the force of the compression spring (10) so as to move the spool (2) from the first position to the second position.
